Europäisches Patentamt

European Patent Office

Office européen des brevets

(11) Numéro de publication: **0 004 809**
A2

## (12) DEMANDE DE BREVET EUROPEEN

(21) Numéro de dépôt: 79400197.4

(22) Date de dépôt: 28.03.79

(51) Int. Cl.²: **B 65 G 45/00**

(30) Priorité: 07.04.78 FR 7810415

(43) Date de publication de la demande:
17.10.79 Bulletin 79/21

(84) Etats Contractants Désignés:
BE DE GB IT NL

(71) Demandeur: Société FIVES-CAIL BABCOCK
7, rue Montalivet
F-75383 Paris Cedex 08(FR)

(72) Inventeur: Finet, Daniel
71, rue Vaillant Couturier
F-59243 Quarouble(FR)

(74) Mandataire: Fontanié, Etienne
7, rue Montalivet
F-75383 Paris Cedex 08(FR)

(54) Dispositif de nettoyage de bande pour transporteur à bande sans fin.

(57) Sur un dispositif de nettoyage de bande (1) pour transporteur à bande sans fin, des raclettes (4, 5) indépendantes sont reliées à un organe de support (6) par l'intermédiaire d'éléments élastiques.

Pour éliminer les risques de rupture des éléments élastiques, pour assurer le maintien permanent des raclettes (4, 5) au contact de la bande (1), et par conséquent éviter tout réglage en service desdites raclettes, les éléments élastiques sont constitués par des joncs (7, 8) en fibre de verre, des moyens (31 à 50) étant prévus pour régler la position de l'organe de support (6) des joncs (7, 8).

Fig.3

EP 0 004 809 A2

0004809

## Dispositif de nettoyage de bande pour transporteur à bande sans fin

La présente invention concerne un dispositif de nettoyage pour transporteur à bande sans fin, comprenant un ensemble de raclettes indépendantes placées sous le brin de retour de la bande ou tangentiellement à un tambour du transporteur.

On connaît déjà un dispositif de nettoyage suivant lequel chaque raclette est montée à une extrémité d'une lame métallique dont l'autre extrémité est solidaire d'un support.

Ce dispositif présente un certain nombre d'inconvénients. On doit notamment prévoir de fréquents réglages de position des raclettes par suite des déformations permanentes des lames métalliques. Ces dernières sont, par ailleurs, sujettes à rupture, ce qui nécessite leur remplacement à des intervalles de temps relativement courts.

L'invention a surtout pour but d'éviter les inconvénients précités.

Elle vise surtout à réaliser un dispositif suivant lequel chaque raclette est maintenue constamment au contact de la face de la bande à nettoyer avec une faible variation de pression au cours de l'usure de la raclette, ce qui supprime pratiquement tout réglage pendant la durée de vie de ladite raclette.

Elle vise également à réaliser un dispositif qui offre la possibilité de s'effacer rapidement en cas de choc avec un obstacle et de reprendre immédiatement sa position normale, protégeant ainsi la bande contre laquelle les raclettes sont appliquées. Sa résistance aux sollicitations mécaniques et climatiques doit en outre lui conférer une grande durée de vie.

- 2 -

0004809

L'invention consiste essentiellement à remplacer les lames métalliques usuelles par des joncs en fibre de verre, de telle sorte que le dispositif réponde aux exigences requises et que, notamment, ses moyens de réglage ne soient pratiquement utilisés qu'en cas de remplacement des raclettes usées, donc dans des conditions fort rares.

L'invention a plus précisément pour objet un dispositif de nettoyage de bande pour transporteur à bande sans fin, comportant un ensemble de raclettes indépendantes reliées à un organe de support par l'intermédiaire d'éléments élastiques, caractérisé en ce que chaque élément élastique est constitué par un jonc en fibre de verre, et en ce que sont prévus des moyens de réglage de la position de l'organe de support desdits joncs.

Chaque extrémité d'un jonc est collée à l'intérieur d'une douille, l'une de ces douilles étant solidaire de la raclette, et l'autre de l'organe de support.

Chaque jonc est de forme cylindrique ou bien conique.

La fixation de chaque raclette sur une douille est assurée par au moins un rivet.

La douille solidaire de l'organe de support est filetée extérieurement et est munie, de part et d'autre dudit organe de support, de deux écrous freinés assurant sa fixation et son réglage en hauteur.

Suivant une variante, la douille solidaire de l'organe de support est obtenue à partir d'une vis maintenue en position par des écrous, un élément élastique amortisseur étant intercalé entre la douille et l'organe de support.

Suivant une autre variante, la douille solidaire de l'organe de support est montée coulissante à l'intérieur d'un manchon cylindrique, le réglage en hauteur de l'organe de support étant assuré au moyen d'une vis tournant à l'intérieur d'un écrou soudé audit manchon.

L'organe de support est monté, à chacune de ses extrémités, sur une cage coulissant verticalement à l'intérieur d'un châssis fixe, ladite cage étant associée à des moyens de réglage angulaire de l'organe de support.

Suivant une première forme de l'invention, les moyens de réglage angulaire comprennent un levier solidaire de l'organe de support, pour entraîner ledit organe de support en rotation, une tige liée au levier assurant son blocage en position sur la cage.

Suivant une deuxième forme de l'invention, les moyens de réglage angulaire comprennent une première plaque sur laquelle est soudée l'extrémité de l'organe de support, et une deuxième plaque solidaire de la cage est disposée contre ladite première plaque, ladite deuxième plaque étant munie de deux ouvertures en forme de boutonnières permettant d'assurer le blocage des deux plaques au moyen de boulons, après que la première plaque ait été amenée en position par rotation de l'organe de support.

Suivant une troisième forme de l'invention, les moyens de réglage angulaire comprennent un ressort spirale enroulé autour de l'extrémité de l'organe de support, une extrémité dudit ressort étant fixée audit organe de support, et l'autre extrémité, de forme rectiligne, constituant un levier coopérant avec des encoches pratiquées sur la face extérieure de la cage.

Suivant une forme de réalisation particulièrement avantageuse, chaque raclette ou groupe de raclettes est réglé à des hauteurs différentes de manière à adapter le dispositif au profil de la bande à nettoyer.

L'invention sera mieux comprise en se référant à la descrip-

0004809

tion qui suit, faite en regard des dessins annexés, concernant plusieurs formes particulières de réalisation données à titre d'exemples non limitatifs.

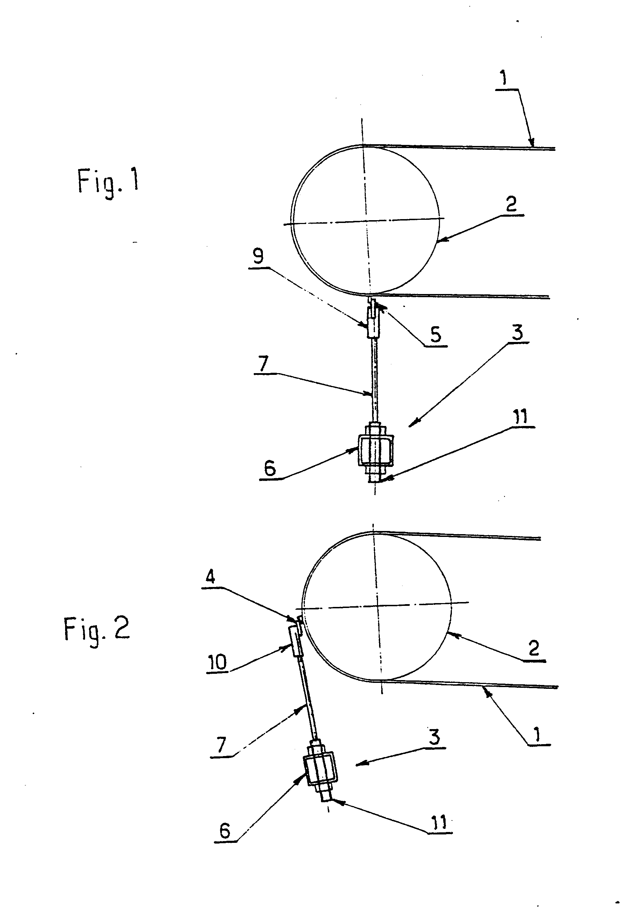

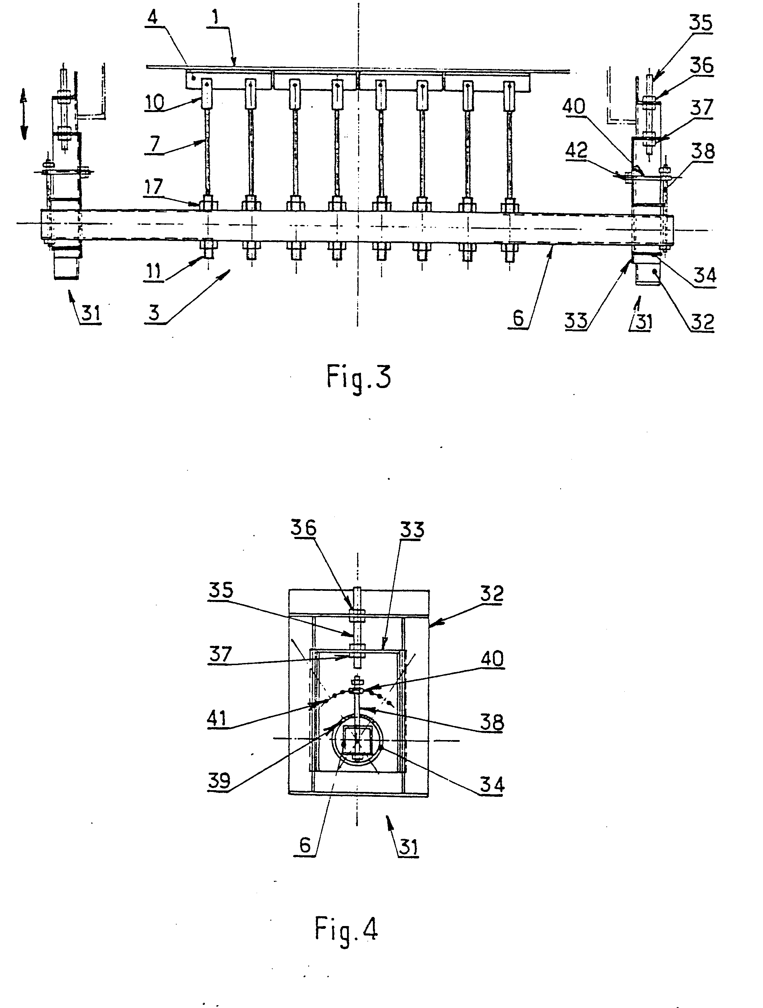

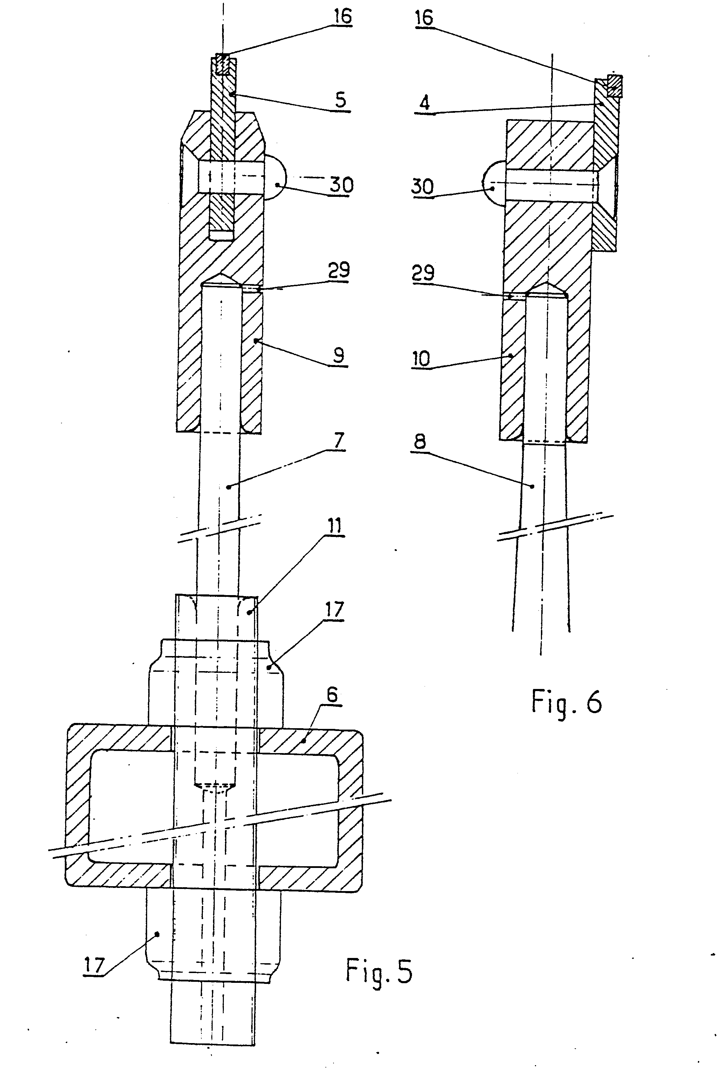

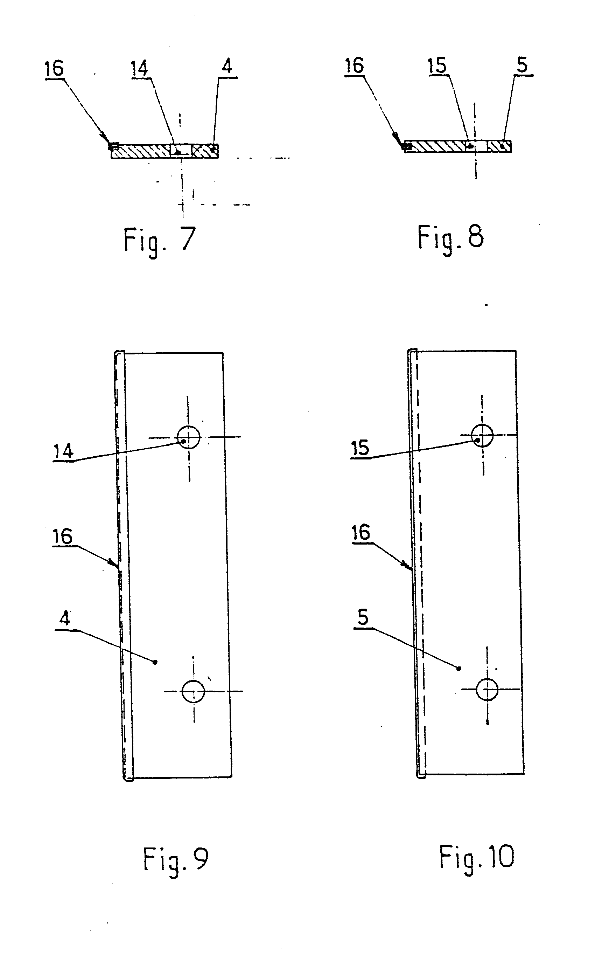

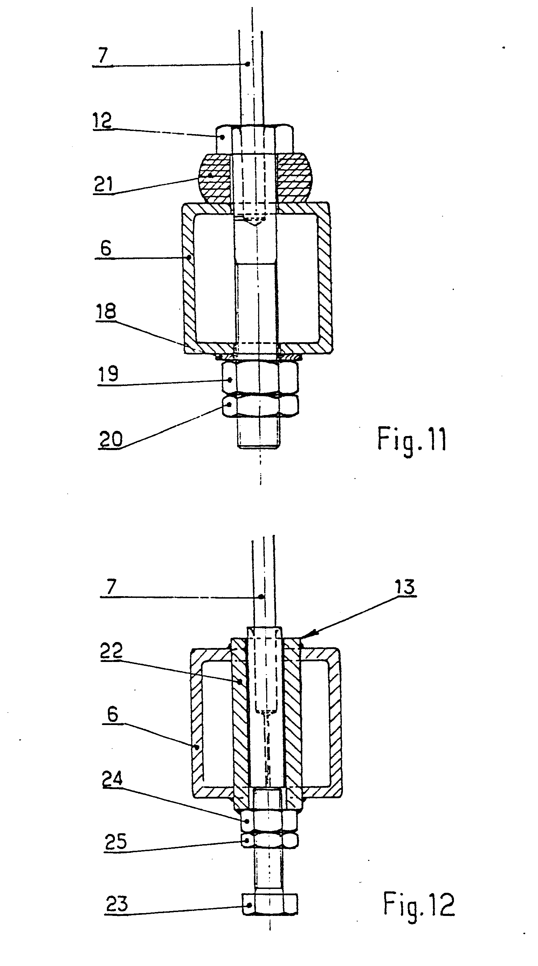

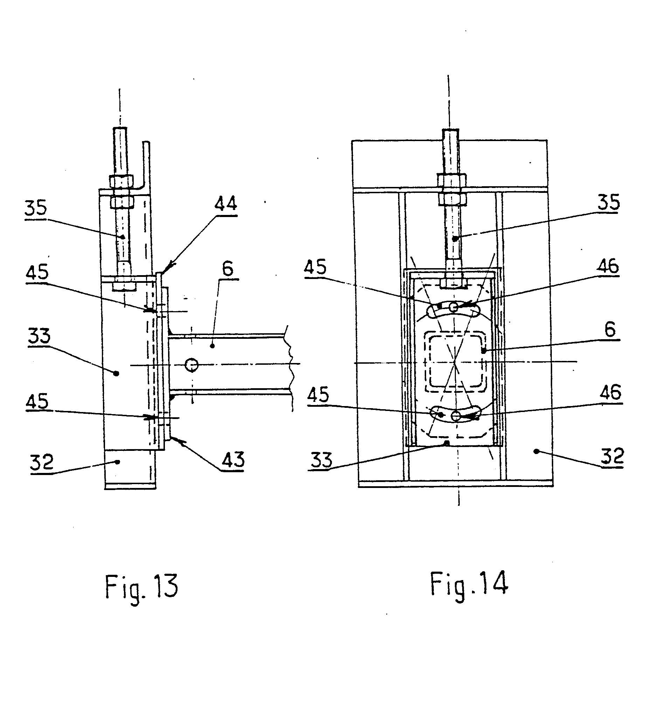

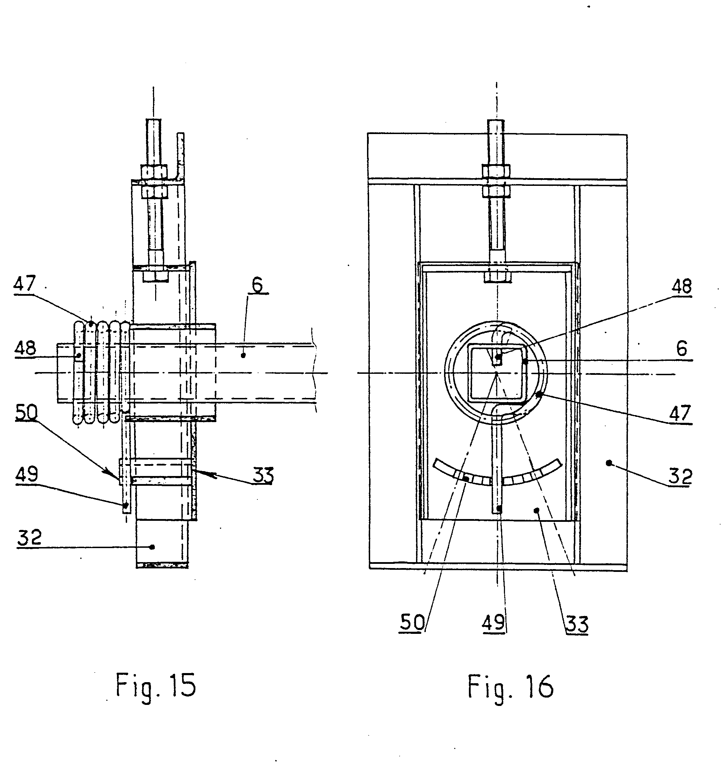

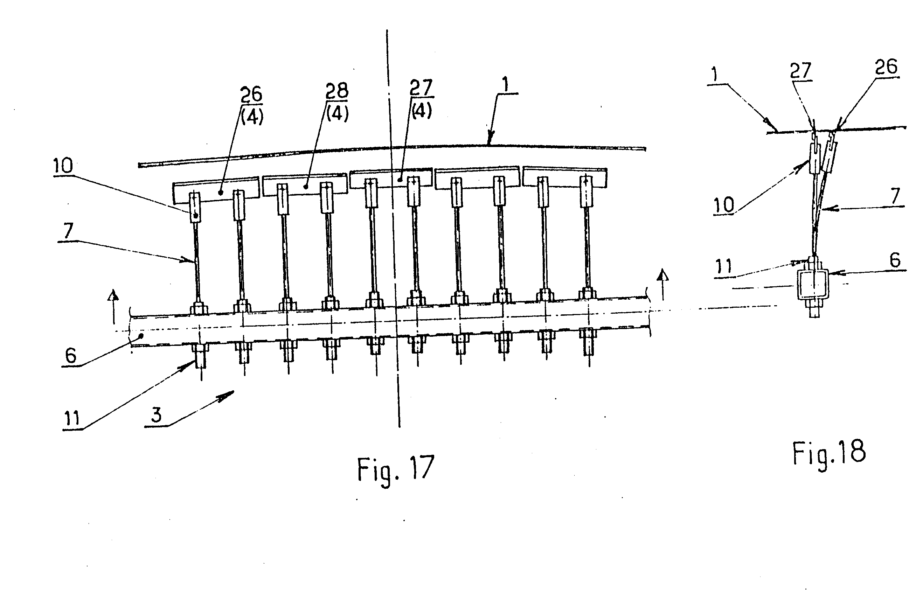

La figure 1 est une vue schématique montrant le dispositif en contact avec la bande suivant une première position ; la figure 2 est une vue analogue à la précédente montrant le dispositif en contact avec la bande suivant une deuxième position ; la figure 3 est une vue de face du dispositif dans le cas de la figure 2 ; la figure 4 est une vue de côté du système de réglage du dispositif selon la figure précédente ; les figures 5 et 6 sont des vues de détail à plus grande échelle montrant un jonc avec ses douilles ; les figures 7 et 8 représentent deux types de raclettes en vue de côté ; les figures 9 et 10 montrent respectivement lesdites raclettes vues de face ; les figures 11 et 12 représentent deux variantes d'exécution des douilles solidaires de l'organe de support ; les figures 13 et 14 représentent une variante du système de réglage, respectivement en vue de face et en vue de côté ; les figures 15 et 16 représentent une autre variante du système de réglage, respectivement en vue de face et en vue de côté ; les figures 17 et 18 illustrent quelques unes des possibilités de réglage offertes par le dispositif.

Sur les figures 1 et 2, on voit une bande 1 de transporteur à bande sans fin dont le repère 2 désigne le tambour de tête. Un dispositif de nettoyage, repéré 3 dans son ensemble, est maintenu contre la bande 1 soit sous le brin inférieur de celle-ci (cas de la figure 1), soit tangentiellement au tambour 2 (cas de la figure 2).

Sur les figures 3 à 12, on voit le dispositif 3 qui comporte une ou plusieurs raclettes indépendantes telles que la raclette 4 ou la raclette 5. Chaque raclette est reliée à un organe de support 6 par l'intermédiaire de joncs en fibre de verre tels que 7 ou 8. Le jonc 7 est de forme cylin-

0004809

drique, tandis que le jonc 8 est de forme conique. L'organe de support 6 est constitué par une pièce de forme tubulaire à section carrée, horizontalement allongée. L'organe de support 6 pourrait bien entendu, être conformé différemment (tube rond ou traverse en forme de L). Les extrémités d'un jonc 7 ou 8 sont collées à l'intérieur de douilles telles que les douilles 9 et 11 de la figure 5. Une variante 10 de la douille 9 est illustrée sur la figure 6, tandis que deux variantes 12 et 13 de la douille 11 sont représentées sur les figures 11 et 12. Les douilles sont munies d'un évent tel que 29 laissant l'air s'échapper pendant l'opération de collage. Ces douilles sont rendues solidaires des raclettes 4 ou 5 à l'aide de rivets tels que 30. A cet effet, les raclettes 4 et 5 comportent des trous, respectivement 14 et 15. Ces raclettes sont, en outre, munies d'une baguette d'usure 16 en matériau très dur, carbure de tungstène par exemple fixée par brasage ou collage sur lesdites raclettes.

La douille 11 est filetée extérieurement et elle est maintenue sur l'organe de support 6 par deux écrous freinés 17 qui permettent d'effectuer un réglage en hauteur, suivant la disposition illustrée sur la figure 5. La douille 12, obtenue à partir d'une vis est maintenue sur l'organe de support 6 par les écrous 19 et 20 reposant sur la rondelle 18. Un élément élastique amortisseur 21 est intercalé entre l'organe de support 6 et la douille 12 ce qui permet un déplacement axial du jonc 7 ou 8. Cette dernière disposition est illustrée sur la figure 11. Suivant la figure 12, la douille 13 glisse dans un manchon cylindrique 22. Le réglage en hauteur s'effectue par l'intermédiaire d'une vis 23 tournant à l'intérieur d'un écrou 24 soudé sur le manchon 22, l'ensemble étant bloqué dans la position choisie par le contre-écrou 25.

Sur la figure 3, on a représenté quatre raclettes 4. Chaque raclette est associée à deux joncs 7. La disposition d'ensemble correspond à celle qui est illustrée sur la figure 2, chaque raclette 4 étant fixée par rivetage dans une douille

0004809

10. Dans le cas d'un transporteur réversible, on utilisera de préférence des raclettes 5 fixées à l'intérieur d'une douille 9, comme cela est représenté sur la figure 5.

Sur la figure 4, on a représenté un système de réglage pour un dispositif réalisé suivant les figures 2, 3 et 5. L'organe de support 6 est monté à chacune de ses extrémités sur un châssis repéré 31 dans son ensemble. Chaque châssis comporte un cadre 32 à l'intérieur duquel est montée coulissante dans le sens vertical une cage 33. Cette dernière est traversée par une pièce tubulaire 34 servant de logement à l'extrémité de l'organe de support 6. Le réglage en hauteur de ce dernier s'effectue au moyen d'une tige filetée 35 coopérant avec des écrous 36 et 37 respectivement solidaires du cadre 32 et de la cage 33. Le réglage angulaire est assuré au moyen d'un levier 38 dont une extrémité est fixée sur l'organe de support 6 et qui peut être positionné dans des encoches 39 pratiquées circulairement dans une échancrure de la pièce tubulaire 34 convenablement découpée à sa partie supérieure. Le réglage angulaire effectué, le levier 38 est bloqué en position par une tige horizontale 40 solidaire dudit levier. A cet effet, l'extrémité de la tige 40 opposée au point d'attache du levier pénètre dans l'un des orifices 41 de la cage 33 où elle est bloquée par un écrou 42.

Les figures 13 et 14 illustrent une variante d'exécution du système de réglage que l'on vient de décrire. Suivant cette variante, l'organe de support 6 est soudé à chacune de ses extrémités sur une plaque 43 disposée contre une plaque 44 solidaire de la cage 33. La plaque 44 est munie de deux boutonnières 45 en arc de cercle. Le réglage angulaire s'effectue par rotation de l'organe de support 6 qui provoque la rotation de la plaque 43 dont il est solidaire. Lorsque le réglage est effectué, le blocage des deux plaques s'effectue aisément à l'aide de boulons 46 traversant la plaque 43 et la boutonnière 45 de la plaque 44 préalablement amenée dans la position désirée. Le réglage en hauteur s'effectue d'une manière identique à celle décrite dans le cas de la figure 4.

Les figures 15 et 16 illustrent une autre variante d'exécution du système de réglage. Suivant cette variante, on prévoit le réglage angulaire avec élasticité de torsion. L'organe de support 6 est monté sur le châssis d'une manière analogue à celle représentée sur la figure 4. Il est ici prévu un ressort spirale 47 qui est enroulé autour de l'extrémité de l'organe de support 6. Une extrémité 48 de ce ressort est fixée audit organe de support tandis que l'extrémité opposée 49 de forme rectiligne constitue un levier apte à coopérer avec des encoches 50 disposées en arc de cercle sur la face de la cage 33.

Les figures 17 et 18 illustrent l'une des nombreuses possibilités de réglage du dispositif, en particulier dans le cas d'un montage suivant la figure 1. Les raclettes d'ailes 26 sont inclinées afin de s'adapter à l'incurvation que peuvent garder les bords de la bande 1 à la suite de la mise en auge du brin supérieur de la bande. La ou les raclettes centrales 27 sont calées plus haut que les raclettes intermédiaires 28, et ceci à l'endroit où la bande 1 est la plus encrassée.

Bien que l'invention ait été décrite en référence à des formes particulières de réalisation, il va de soi qu'elle n'y est en rien limitée et que des modifications peuvent lui être apportées sans sortir de son domaine.

On pourra utiliser indiféremment l'une ou l'autre des dispositions décrites suivant les possibilités de positionnement de l'organe de support des raclettes par rapport à la bande. On pourra, bien entendu, remplacer l'un quelconque des moyens décrits par un moyen techniquement équivalent.

L'invention couvre donc, outre les exemples représentés, leurs différentes variantes d'exécution possibles.

0004809

Revendications de brevet

1. Dispositif de nettoyage de bande pour transporteur à bande sans fin, comportant un ensemble de raclettes indépendantes reliées à un organe de support par l'intermédiaire d'éléments élastiques, caractérisé en ce que chaque élément élastique est constitué par un jonc (7, 8) en fibre de verre, et en ce que sont prévus des moyens de réglage de la position de l'organe de support (6) desdits joncs.

2. Dispositif suivant la revendication 1, caractérisé en ce que chaque extrémité d'un jonc (7, 8) est collée à l'intérieur d'une douille, l'une de ces douilles (9, 10) étant solidaire de la raclette (4, 5), et l'autre (11, 12, 13) de l'organe de support (6).

3. Dispositif suivant l'une des revendications 1 ou 2, caractérisé en ce que chaque jonc (7) est de forme cylindrique.

4. Dispositif suivant l'une des revendications 1 ou 2, caractérisé en ce que chaque jonc (8) est de forme conique.

5. Dispositif suivant la revendication 2, caractérisé en ce que la fixation de chaque raclette (4, 5) sur une douille (9, 10) est assurée par au moins un rivet (30).

6. Dispositif suivant la revendication 2, caractérisé en ce que la douille (11) solidaire de l'organe de support (6) est filetée extérieurement et est munie, de part et d'autre dudit organe de support, de deux écrous freinés (17) assurant sa fixation et son réglage en hauteur.

7. Dispositif suivant la revendication 2, caractérisé en ce que la douille (12) solidaire de l'organe de support (6) est obtenue à partir d'une vis maintenue en position par des écrous (19, 20), un élément élastique amortisseur (21) étant intercalé entre la douille (12) et l'organe de sup-

port (6).

8. Dispositif suivant la revendication 2, caractérisé en ce que la douille (13) solidaire de l'organe de support (6) est montée coulissante à l'intérieur d'un manchon cylindrique (22), le réglage en hauteur de l'organe de support (6) étant assuré au moyen d'une vis (23) tournant à l'intérieur d'un écrou (24) soudé audit manchon.

9. Dispositif suivant l'une des revendications 1 à 8, caractérisé en ce que l'organe de support (6) est monté, à chacune de ses extrémités, sur une cage (33) coulissant verticalement à l'intérieur d'un châssis fixe (31), ladite cage étant associée à des moyens de réglage angulaire de l'organe de support (6).

10. Dispositif suivant la revendication 9, caractérisé en ce que les moyens de réglage angulaire comprennent un levier (38) solidaire de l'organe de support (6), pour entraîner ledit organe de support en rotation, une tige (40), liée au levier (38), assurant son blocage en position sur la cage (33).

11. Dispositif suivant la revendication 9, caractérisé en ce que les moyens de réglage angulaire comprennent une première plaque (43) sur laquelle est soudée l'extrémité de l'organe de support (6), et une deuxième plaque (44) solidaire de la cage (33) et disposée contre ladite première plaque, ladite deuxième plaque étant munie de deux ouvertures en forme de boutonnières (45) permettant d'assurer le blocage des deux plaques au moyen de boulons (46), après que la première plaque (43) ait été amenée en position par rotation de l'organe de support (6).

12. Dispositif suivant la revendication 9, caractérisé en ce que les moyens de réglage angulaire comprennent un ressort spirale (47) enroulé autour de l'extrémité de l'organe de support (6), une extrémité (48) dudit ressort étant fixée audit organe de support, et l'autre extrémité (49) dudit ressort, de forme rectiligne, constituant un levier coopérant avec des encoches (50) pratiquées sur la face extérieure de la cage (33).

13. Dispositif suivant l'une quelconque des revendications précédentes, caractérisé en ce que chaque raclette (4, 5) ou groupe (26, 27, 28) de raclettes (4, 5) est réglé à des hauteurs différentes de manière à adapter le dispositif au profil de la bande (1) à nettoyer.

Fig. 1

Fig. 2

1/8

0004809

2/8

0004809

Fig.3

Fig.4

0004809

Fig. 5

Fig. 6

16　14　4

Fig. 7

16　15　5

Fig. 8

14

16

4

Fig. 9

15

16

5

Fig. 10

0004809

Fig.11

Fig.12

Fig. 13

Fig. 14

Fig. 15

Fig. 16

Fig.18

Fig. 17